# DEMANDE DE BREVET EUROPEEN

(11) **EP 4 696 521 A1**
(43) Date de publication de la demande: **18.02.2026**
(21) Numéro de dépôt: 25189814.4
(22) Date de dépôt: 16.07.2025
(51) Int. Cl.: B60B 7/04, B60B 7/06, B60B 7/08

(54) **ENJOLIVEUR À POSITIONNEMENT PRÉCIS CONTRE UN VOILE D'UNE ROUE D'UN VÉHICULE TERRESTRE**

(30) Priorité: 12.08.2024 FR 2408846
(71) Demandeur: Stellantis Auto SAS, 78300 Poissy (FR)
(72) Inventeur: PALPACUER, ERIC, 75013 PARIS (FR)
(74) Mandataire: Ipsilon

(57) **Abrégé**

Un enjoliveur (ER) équipe une roue (RV) propre à équiper un véhicule terrestre et comprenant une jante (JR) à l'intérieur de laquelle est logé fixement un voile (VR) muni d'au moins un ajourage (AV). Cet enjoliveur (ER) comprend une pièce de support (PS) comportant des première (P1) et deuxième (P2) parties s'appuyant respectivement contre un bord (BA) de l'ajourage (AV) et la jante (JR), et une pièce d'habillage (PH) couplée à la pièce de support (PS) et comprenant un bord périphérique (BP) muni d'une face arrière (FA) orientée vers le voile (VR) et munie en au moins trois endroits distants d'éléments de positionnement (EP) positionnant la pièce d'habillage (PH) contre le voile (VR).

## Description

### Domaine technique de l'invention

L'invention concerne les véhicules terrestres à roues, et plus précisément les enjoliveurs qui sont destinés à équiper les roues de tels véhicules terrestres.

### Etat de la technique

Certains véhicules terrestres, par exemple de type automobile, comprennent des roues comportant une jante centrée sur un axe de rotation et sur laquelle est monté un pneumatique, et un voile rapporté, logé fixement à l'intérieur de la jante en étant centré sur l'axe de rotation et muni d'au moins un ajourage.

Ces roues peuvent recevoir un enjoliveur de grande taille, ou au moins un enjoliveur de petite taille (ou micro-enjoliveur) associé à un ajourage de leur voile. Dans cette seconde alternative, chaque enjoliveur de petite taille (ou micro-enjoliveur) peut comprendre une pièce de support couplée à un ajourage et à la jante, et une pièce d'habillage couplée à cette pièce de support.

Par exemple, et comme décrit notamment dans le document brevet FR-A1-3116232, la pièce de support peut comprendre des première et deuxième parties qui sont agencées pour s'appuyer respectivement contre un bord d'un ajourage de voile et la jante associée à ce voile.

En raison des tolérances dimensionnelles respectives des pièce de support, pièce d'habillage et voile de roue, et du mode de couplage (généralement par clippage) entre les pièce de support et pièce d'habillage, il existe fréquemment un jeu entre le voile et le bord périphérique de la pièce d'habillage (situé à proximité immédiate de ce voile). Or, lorsque la roue subit des chocs et/ou vibrations, ce jeu permet que le bord périphérique de la pièce d'habillage heurte le voile, ce qui engendre des bruits pouvant être gênants et/ou inquiétants, et donc pouvant nuire à l'impression de qualité du véhicule. En outre, les chocs répétés de la pièce d'habillage contre le voile induisent une accélération du vieillissement de l'enjoliveur.

L'invention a donc notamment pour but d'améliorer la situation.

### Présentation de l'invention

Elle propose notamment à cet effet un enjoliveur, d'une part, destiné à équiper une roue propre à faire partie d'un véhicule terrestre et comprenant une jante à l'intérieur de laquelle est logé fixement un voile muni d'au moins un ajourage, et, d'autre part, comprenant :
- une pièce de support comportant des première et deuxième parties agencées pour s'appuyer respectivement contre un bord de cet ajourage et cette jante, et
- une pièce d'habillage couplée à la pièce de support et comprenant un bord périphérique muni d'une face arrière propre à être orientée vers le voile.

Cet enjoliveur se caractérise par le fait que la face arrière du bord périphérique est munie en au moins trois endroits distants d'éléments de positionnement propres à positionner la pièce d'habillage contre le voile.

La pièce d'habillage étant désormais précisément positionnée contre le voile, il n'y a plus de risque que les tolérances dimensionnelles et le mode de couplage entre les pièce de support et pièce d'habillage permettent que le bord périphérique de la pièce d'habillage heurte le voile lorsque la roue subit des chocs et/ou vibrations, et donc il n'y a plus de risque que l'enjoliveur engendre des bruits pouvant être gênants et/ou inquiétants et donc nuise à l'impression de qualité du véhicule.

L'enjoliveur selon l'invention peut comporter d'autres caractéristiques qui peuvent être prises séparément ou en combinaison, et notamment :
- la face arrière du bord périphérique peut être munie en quatre endroits distants d'éléments de positionnement ;
- les éléments de positionnement peuvent être propres à positionner de façon isostatique la pièce d'habillage contre le voile ;
- les éléments de positionnement peuvent être des protubérances propres à s'appuyer contre le voile ;
- en présence de la dernière option, chaque protubérance peut être au moins revêtue d'un matériau amortissant ;
- la pièce de support peut comprendre une troisième partie reliant les première et deuxième parties et présentant une élasticité propre à exercer sur les première et deuxième parties des pressions propres à les plaquer respectivement contre le bord de l'ajourage et la jante ;
- en présence de la dernière option, la troisième partie peut comprendre deux bras curvilignes définissant respectivement des zones convexes opposées entre elles, et reliant chacun les première et deuxième parties ;
- en présence de la dernière sous-option, chaque bras curviligne peut présenter une forme générale en U ;
- la première partie de la pièce de support peut avoir une forme semi-circulaire et peut délimiter une gorge propre à loger une partie du bord de l'ajourage ;
- la pièce d'habillage peut comprendre des premiers éléments de clippage. Dans ce cas, la pièce de support peut comprendre des seconds éléments de clippage propres à coopérer avec les premiers éléments de clippage correspondants pour coupler entre elles les pièce d'habillage et pièce de support ;
- en présence de la dernière option, l'un des seconds éléments de clippage peut être défini sur la première partie de la pièce de support ;
- la pièce d'habillage peut comprendre au moins une protubérance anti-rotation propre à s'appuyer contre le bord de l'ajourage ;
- en présence de la dernière option, la pièce d'habillage peut comprendre deux protubérances anti-rotation distantes et propres à s'appuyer respectivement contre deux sous-parties du bord de l'ajourage.

L'invention propose également une roue propre à équiper un véhicule terrestre et comprenant, d'une part, une jante à l'intérieur de laquelle est logé fixement un voile muni d'au moins un ajourage, et, d'autre part, au moins un enjoliveur du type de celui présenté ci-avant et couplé au voile au niveau de l'ajourage et plaqué contre la jante.

L'invention propose également un véhicule terrestre comprenant au moins deux roues du type de celle présentée ci-avant.

Par exemple, ce véhicule terrestre peut comprendre quatre roues, et peut être de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective, un exemple de réalisation d'une roue comprenant un exemple de réalisation d'enjoliveur selon l'invention,
[Fig. 2] illustre schématiquement, dans une vue en coupe dans un plan vertical, une partie de la roue de la figure 1 comprenant l'enjoliveur,
[Fig. 3] illustre schématiquement, dans une vue en perspective, la pièce d'habillage de l'enjoliveur des figures 1 et 2,
[Fig. 4] illustre schématiquement, dans une vue en perspective, la pièce de support de l'enjoliveur des figures 1 et 2, et
[Fig. 5] illustre schématiquement, dans une vue en perspective, la pièce d'habillage de la figure 3 couplée à la pièce de support de la figure 4.

### Description détaillée de l'invention

L'invention a notamment pour but de proposer un (micro-)enjoliveur ER destiné à équiper une roue RV, propre à recevoir un pneumatique et à faire partie d'un véhicule terrestre, et n'induisant pas de bruits d'entrechoquements contre cette roue RV en présence de chocs et/ou vibrations.

Dans ce qui suit, on considère, à titre d'exemple non limitatif, que le véhicule terrestre est de type automobile. Il s'agit par exemple d'une voiture. Mais l'invention n'est pas limitée à ce type de véhicule terrestre à roues. Elle concerne en effet tout véhicule terrestre comprenant au moins deux roues.

Par ailleurs, dans ce qui précède et ce qui suit, on entend par « face interne » une face d'un élément qui est destinée à être orientée vers le véhicule, et par « face externe » une face de ce même élément qui est destinée à être orientée vers l'extérieur du véhicule et donc opposée à la face interne.

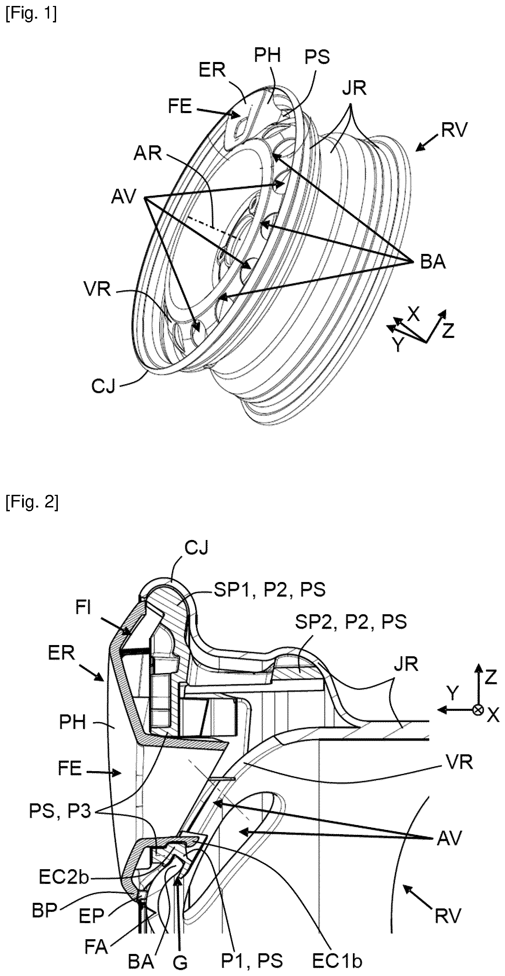

Sur les figures 1 à 5 la direction X est destinée à être parallèle à la direction longitudinale du véhicule (terrestre), laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

On a schématiquement illustré au moins partiellement sur les figures 1 et 2 un exemple de roue RV destinée à équiper un véhicule terrestre et comprenant une jante JR, un voile VR et un (micro-)enjoliveur ER selon l'invention.

La jante JR est de forme générale cylindrique, centrée sur un axe de rotation AR (voir figure 1), et propre à recevoir un pneumatique.

Par ailleurs, la jante JR comprend un rebord externe qui est propre à maintenir un flanc externe du pneumatique et qui comporte un crochet CJ. On notera, comme cela apparaît sur la figure 2, que la jante JR comprend aussi un rebord interne opposé au rebord externe, propre à maintenir le flanc interne du pneumatique et comportant un autre crochet.

Le voile VR est rapporté et logé fixement à l'intérieur de la jante JR en étant centré sur l'axe de rotation AR. Par exemple, le voile VR peut être solidarisé fixement à la jante JR par soudage, et est destiné à être solidarisé à un moyeu, comme par exemple un porte-fusée du véhicule.

De plus, le voile VR comprend au moins un ajourage AV. On notera que dans l'exemple illustré non limitativement sur la figure 1 le voile VR comprend de nombreux ajourages AV (typiquement quatorze), parmi lesquels un est (ici) entièrement masqué par un enjoliveur ER selon l'invention. Mais le nombre d'ajourages AV d'un voile VR peut prendre n'importe quelle valeur supérieure ou égale à un. De même, le nombre d'ajourages AV d'une roue RV peut prendre n'importe quelle valeur supérieure ou égale à un (ce dernier nombre est cependant inférieur ou égal au nombre d'ajourages AV du voile VR).

On notera que le nombre d'enjoliveurs ER équipant une roue RV peut prendre n'importe quelle valeur supérieure ou égale à un et inférieure ou égale au nombre d'ajourages de cette roue RV.

Comme illustré au moins partiellement sur les figures 1 à 5, un enjoliveur ER, selon l'invention, comprend au moins une pièce de support PS et une pièce d'habillage PH.

Comme illustré sur les figures 1 et 2, la pièce de support PS est destinée à être couplée au voile VR d'une roue RV au niveau d'un ajourage AV et plaquée contre la jante JR de cette roue RV.

Comme illustré sur les figures 2, 4 et 5, la pièce de support PS comprend des première P1 et deuxième P2 parties, ainsi qu'une éventuelle troisième partie P3.

La première partie P1 est agencée de manière à s'appuyer contre un bord BA d'un ajourage AV.

La deuxième partie P2 est agencée de manière à s'appuyer contre la jante JR.

Comme illustré au moins partiellement sur les figures 1, 2 et 5, la pièce d'habillage PH est couplée à la pièce de support PS et visible de l'extérieur du véhicule. Elle permet de masquer quasiment intégralement la pièce de support PS, et notamment les parties techniques de cette dernière (PS). De plus, elle permet aussi de participer au style de la roue RV et donc du véhicule. On notera qu'elle peut éventuellement être personnalisable pour satisfaire le plus grand nombre d'utilisateurs de véhicules terrestres, par exemple grâce à une sélection parmi différentes couleurs et/ou différentes formes et/ou différents aspects (au moins de sa face externe FE (visible de l'extérieur du véhicule)).

Cette pièce d'habillage PH comprend un bord périphérique BP qui est muni d'une face arrière FA propre à être orientée vers le voile VR. De plus, cette face arrière FA est munie en au moins trois endroits distants d'éléments de positionnement EP qui sont propres à positionner la pièce d'habillage PH contre le voile VR.

Grâce à ce positionnement précis de la pièce d'habillage PH contre le voile VR (en au moins trois endroits distants), il n'y a plus de risque que les tolérances dimensionnelles respectives des pièce de support PS, pièce d'habillage PH et voile VR, et le mode de couplage entre les pièce de support PS et pièce d'habillage PH, permettent que le bord périphérique BP de la pièce d'habillage PH heurte le voile VR lorsque la roue RV subit des chocs et/ou vibrations. De ce fait, il n'y a plus de risque que l'enjoliveur ER engendre des bruits pouvant être gênants et/ou inquiétants et donc nuise à l'impression de qualité du véhicule. De plus, en l'absence d'entrechoquements de l'enjoliveur ER contre le voile VR, il n'y a plus de risque de vieillissement accéléré de l'enjoliveur EP.

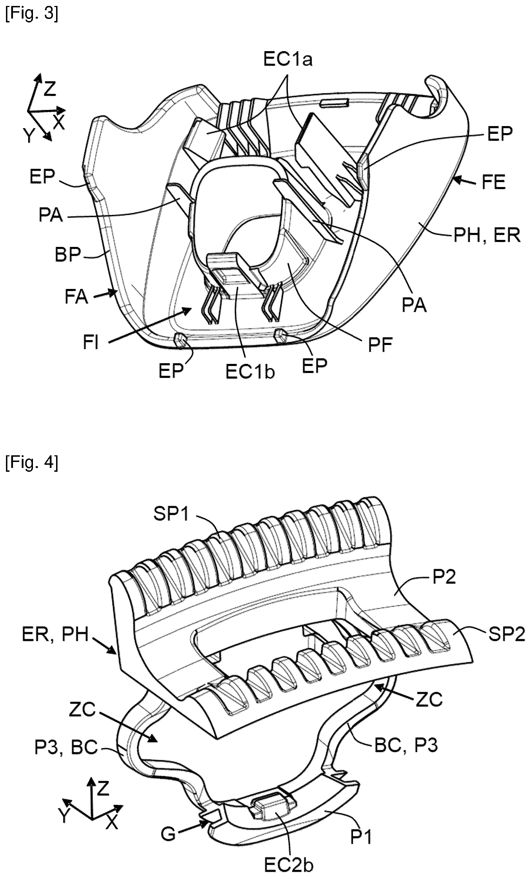

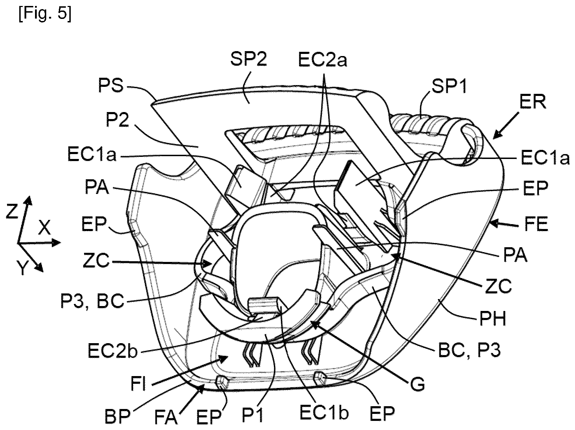

Par exemple, et comme illustré non limitativement sur les figures 3 et 5, la face arrière FA de la pièce d'habillage PH peut être munie en quatre endroits distants d'éléments de positionnement EP. Cela permet de renforcer encore plus la précision du positionnement de l'enjoliveur EP, et d'empêcher encore plus les entrechoquements de l'enjoliveur ER contre le voile VR.

De préférence, les éléments de positionnement EP peuvent être propres à positionner de façon isostatique la pièce d'habillage PH contre le voile VR. Cet isostatisme permet de garantir qu'aucune sous-partie du bord périphérique BP de la pièce d'habillage PH va heurter le voile VR.

Egalement par exemple, et comme illustré non limitativement sur les figures 3 et 5, les éléments de positionnement EP peuvent être des protubérances saillant sur la face arrière FA du bord périphérique BP de la pièce d'habillage PH et propres à s'appuyer contre le voile VR (de façon très ponctuelle ou étendue (sur quelques millimètres)).

On notera par ailleurs, que chaque protubérance EP peut être au moins revêtue d'un matériau amortissant, comme par exemple un élastomère, du caoutchouc (éventuellement synthétique), ou une mousse. Dans ce cas, chaque protubérance EP peut être réalisée soit dans le même matériau que le reste de la pièce d'habillage PH puis revêtue du matériau amortissant, soit intégralement avec le matériau amortissant. Ces deux alternatives sont compatibles avec un moulage par bi-injection de la pièce d'habillage PH. Mais dans une variante de réalisation, le matériau amortissant pourrait être rapporté après réalisation de la pièce d'habillage PH (avec ou sans ses protubérances EP). Dans cette variante, la pièce d'habillage PH pourrait être réalisée en métal (éventuellement par moulage et/ou usinage).

On notera également que dans une autre variante, les éléments de positionnement EP pourraient ne pas être des protubérances (rigides ou amortissantes). Ainsi, il pourrait, par exemple, s'agir d'éléments rapportés sur la face arrière FA du bord périphérique BP de la pièce d'habillage PH, comme par exemple des ressorts (à lame ou hélicoïdaux) ou des plots en élastomère ou en caoutchouc.

Comme cela apparaît mieux sur les figures 4 et 5, la pièce de support PS peut comprendre une troisième partie P3 reliant ses première P1 et deuxième P2 parties et présentant une élasticité propre à exercer sur les première P1 et deuxième P2 parties des pressions qui sont propres à les plaquer respectivement contre le bord BA de l'ajourage AV et la jante JR. On comprendra qu'en présence d'un tel agencement, la troisième partie P3 agit comme une espèce de ressort de renvoi qui repousse automatiquement et de façon permanente la deuxième partie P2 contre la jante JR, mais aussi la première partie P1 contre le bord BA de l'ajourage AV, du fait de son élasticité.

L'enjoliveur ER se retrouve ainsi étroitement plaqué contre la jante JR et le bord BA de l'ajourage AV ce qui rend quasiment nulle, voire nulle, la probabilité que l'enjoliveur ER puisse se découpler de sa roue RV. En outre, cela rend aussi quasiment nulle la probabilité que l'enjoliveur ER soit entraîné en rotation par rapport à la roue RV, y compris en présence de chocs et/ou vibrations importants. Il n'y a donc (quasiment) plus de risque qu'un enjoliveur ER nuise à l'esthétique du véhicule ou à l'impression de qualité du véhicule du fait de son entraînement en rotation (devenu (quasiment) impossible)). De plus, cette élasticité permet avantageusement de faciliter l'installation de l'enjoliveur ER sur la roue RV.

Par exemple, et comme illustré non limitativement sur les figures 4 et 5, la troisième partie P3 de la pièce de support PS peut comprendre deux bras curvilignes BC définissant respectivement des zones convexes ZC opposées entre elles, et reliant chacun les première P1 et deuxième P2 parties. Les deux zones convexes ZC s'étendent donc selon les deux sens opposés (ici) de la direction longitudinale X.

De préférence, et comme illustré non limitativement, les deux bras curvilignes BC ont des formes symétriques par rapport à un plan YZ.

On comprendra que la forme convexe des bras curvilignes BC élastiques permet, au début de l'installation de l'enjoliveur ER, d'encaisser une réduction de la distance séparant les première P1 et deuxième P2 parties, et, en fin d'installation, de repousser la deuxième partie P2 contre la jante JR et la première partie P1 contre le bord BA de l'ajourage AV.

Par exemple, et comme illustré non limitativement sur la figure 4, chaque bras curviligne BC peut présenter une forme générale en U (pour délimiter sa zone convexe ZC), avec deux extensions vers les première P1 et deuxième P2 parties.

Egalement par exemple, et comme illustré non limitativement sur les figures 4 et 5, la première partie P1 peut avoir une forme semi-circulaire et peut délimiter une gorge G qui est propre à loger une partie du bord BA de l'ajourage AV. On comprendra que cette forme de la première partie P1 est adaptée à une forme similaire (semi-circulaire) de cette partie du bord BA de l'ajourage AV. Grâce à cette gorge G qui loge la partie du bord BA, il n'y a pas de risque que la première partie P1 se dégage de ce bord PA, y compris en présence d'un important choc et compte tenu de l'élasticité de la troisième partie P3.

Egalement par exemple, et comme illustré non limitativement sur les figures 2, 4 et 5, la deuxième partie P2 peut comprendre des première SP1 et seconde SP2 sous-parties qui sont destinées à être plaquées contre deux parties distantes de la jante JR. Ici, la première sous-partie SP1 est destinée à être logée dans un premier logement concave défini par le crochet CJ du rebord externe de la jante JR et à être plaquée contre ce crochet CJ, et la seconde sous-partie SP2 est destinée à être logée dans un second logement concave défini par le siège du rebord externe de la jante JR et à être plaquée contre ce siège.

On comprendra que cette forme de la seconde partie P2 est adaptée aux formes des premier et second logements concaves du rebord externe de la jante JR. Grâce à ces logements des première SP1 et seconde SP2 sous-parties de la deuxième partie P2 dans les premier et second logements concaves, il n'y a pas de risque que la deuxième partie P2 se dégage du rebord externe de la jante JR, y compris en présence d'un important choc et compte tenu de l'élasticité de la troisième partie P3.

Egalement par exemple, et comme illustré non limitativement sur les figures 2 à 5, la pièce d'habillage PH peut comprendre des premiers éléments de clippage EC1a et EC1b, de préférence sur une face interne FI, opposée à sa face externe FE. Dans ce cas, la pièce de support PS peut comprendre des seconds éléments de clippage EC2a et EC2b qui sont propres à coopérer avec les premiers éléments de clippage EC1a et EC1b correspondants pour coupler entre elles la pièce d'habillage PH et la pièce de support PS.

Egalement par exemple, et comme illustré non limitativement sur les figures 2, 4 et 5, l'un des seconds éléments de clippage EC2a et EC2b peut être défini sur la première partie P1 de la pièce de support PS. Dans l'exemple illustré, ce second élément de clippage EC2b défini sur la première partie P1 est un cran de clippage destiné à être logé dans un trou de clippage correspondant défini dans une patte de clippage constituant un premier élément de clippage EC1b correspondant érigé sur la face interne FI de la pièce d'habillage PH. Mais d'autres agencements de ces premier EC1b et second EC2b éléments de clippage peuvent être envisagés.

Egalement par exemple, et comme illustré non limitativement sur les figures 3 et 5, la pièce d'habillage PH peut comprendre sur sa face interne FI deux autres premiers éléments de clippage EC1a coopérant avec deux autres seconds éléments de clippage EC2a correspondants de la pièce de support PS. Dans l'exemple illustré, les deux autres seconds éléments de clippage EC2a sont des pattes de clippage dont les crans sont clippés respectivement sur des faces de clippage constituant les deux autres premiers éléments de clippage EC1a correspondants. Mais d'autres agencements de ces autres premiers EC1a et seconds EC2a éléments de clippage peuvent être envisagés.

Grâce à ces trois premiers éléments de clippage EC1a et EC1b coopérant avec ces trois seconds éléments de clippage EC2a et EC2b, en trois endroits distants deux à deux, les pièce d'habillage PH et pièce de support PS sont étroitement couplées de façon pérenne, et donc la probabilité d'un découplage de la pièce d'habillage PH de la pièce de support PS (couplée étroitement à la roue RV) est (quasi) nulle.

Egalement par exemple, et comme illustré non limitativement sur les figures 3 et 5, la pièce d'habillage PH peut comprendre au moins une protubérance anti-rotation PA qui est propre à s'appuyer contre le bord BA de l'ajourage AV concerné. On comprendra que chaque protubérance anti-rotation PA définit un point d'appui entre l'enjoliveur ER et la roue RV qui vient s'ajouter aux points d'appui entre l'enjoliveur ER et la roue RV définis par les première P1 et deuxième P2 parties. Ainsi, il devient totalement impossible que l'enjoliveur ER soit entraîné en rotation par rapport à la roue RV au niveau de l'ajourage AV correspondant (qu'il masque au moins partiellement).

Dans l'exemple illustré non limitativement sur les figures 3 et 5, la pièce d'habillage PH comprend deux protubérances anti-rotation PA qui sont propres à s'appuyer contre deux sous-parties du bord BA de l'ajourage AV concerné, ce qui rend encore plus impossible tout entraînement en rotation de l'enjoliveur ER.

On notera que dans l'exemple illustré non limitativement sur les figures 3 et 5, les deux protubérances anti-rotation PA sont définies sur une face d'une paroi fermée PF érigée sur la face interne FI de la pièce d'habillage PH. Cette paroi fermée PF délimite un logement qui est préférentiellement ouvert au niveau de ses deux extrémités opposées (ici suivant la direction transversale Y) afin de permettre à l'air de circuler de l'extérieur vers l'intérieur de la roue RV via l'ajourage AV concerné, et inversement. On comprendra que dans ce cas la pièce d'habillage PH comprend un trou traversant situé à l'une des extrémités de la paroi fermée PF.

On notera également que la pièce de support PS peut, par exemple, être réalisée par moulage d'une matière plastique ou par une imprimante 3D. Mais dans une variante, la pièce de support PS pourrait être réalisée en métal (éventuellement par moulage et/ou usinage).

## Revendications

1. Enjoliveur (ER) pour une roue (RV) propre à équiper un véhicule terrestre et comprenant une jante (JR) à l'intérieur de laquelle est logé fixement un voile (VR) muni d'au moins un ajourage (AV), ledit enjoliveur (ER) comprenant i) une pièce de support (PS) comportant des première (P1) et deuxième (P2) parties agencées pour s'appuyer respectivement contre un bord (BA) dudit ajourage (AV) et ladite jante (JR), et ii) une pièce d'habillage (PH) couplée à ladite pièce de support (PS) et comprenant un bord périphérique (BP) muni d'une face arrière (FA) propre à être orientée vers ledit voile (VR), **caractérisé en ce que** ladite face arrière (FA) est munie en au moins trois endroits distants d'éléments de positionnement (EP) propres à positionner ladite pièce d'habillage (PH) contre ledit voile (VR).

2. Enjoliveur selon la revendication 1, **caractérisé en ce que** ladite face arrière (FA) est munie en quatre endroits distants d'éléments de positionnement (EP).

3. Enjoliveur selon la revendication 1 ou 2, **caractérisé en ce que** lesdits éléments de positionnement (EP) sont propres à positionner de façon isostatique ladite pièce d'habillage (PH) contre ledit voile (VR).

4. Enjoliveur selon l'une des revendications 1 à 3, **caractérisé en ce que** lesdits éléments de positionnement (EP) sont des protubérances propres à s'appuyer contre ledit voile (VR).

5. Enjoliveur selon la revendication 4, **caractérisé en ce que** chaque protubérance (EP) est au moins revêtue d'un matériau amortissant.

6. Enjoliveur selon l'une des revendications 1 à 5, **caractérisé en ce que** ladite pièce de support (PS) comprend une troisième partie (P3) reliant lesdites première (P1) et deuxième (P2) parties et présentant une élasticité propre à exercer sur lesdites première (P1) et deuxième (P2) parties des pressions propres à les plaquer respectivement contre ledit bord (BA) et ladite jante (JR).

7. Enjoliveur selon la revendication 6, **caractérisé en ce que** ladite troisième partie (P3) comprend deux bras curvilignes (BC) définissant respectivement des zones convexes (ZC) opposées entre elles, et reliant chacun lesdites première (P1) et deuxième (P2) parties.

8. Enjoliveur selon l'une des revendications 1 à 7, **caractérisé en ce que** ladite première partie (P1) a une forme semi-circulaire et délimite une gorge (G) propre à loger une partie dudit bord (BA) de l'ajourage (AV).

9. Enjoliveur selon l'une des revendications 1 à 8, **caractérisé en ce que** ladite pièce d'habillage (PH) comprend des premiers éléments de clippage (EC1a, EC1b), et **en ce que** ladite pièce de support (PS) comprend des seconds éléments de clippage (EC2a, EC2b) propres à coopérer avec les premiers éléments de clippage (EC1a, EC1b) correspondants pour coupler entre elles lesdites pièce d'habillage (PH) et pièce de support (PS).

10. Roue (RV) propre à équiper un véhicule terrestre et comprenant une jante (JR) à l'intérieur de laquelle est logé fixement un voile (VR) muni d'au moins un ajourage (AV), **caractérisée en ce qu'**elle comprend en outre au moins un enjoliveur (ER) selon l'une des revendications 1 à 9, couplé audit voile (VR) au niveau dudit ajourage (AV) et plaqué contre ladite jante (JR).
